Europäisches Patentamt

European Patent Office

Office européen des brevets

(11) Veröffentlichungsnummer: **0 272 606 B1**

# EUROPÄISCHE PATENTSCHRIFT

(45) Veröffentlichungstag der Patentschrift: **10.04.91**

(51) Int. Cl.5: **B29C 47/80**, B29C 47/86

(21) Anmeldenummer: **87118671.4**

(22) Anmeldetag: **16.12.87**

(54) Verfahren zum Extrudieren von ultrahochmolekularem Polyethylen.

(30) Priorität: **24.12.86 DE 3644521**

(43) Veröffentlichungstag der Anmeldung:
**29.06.88 Patentblatt 88/26**

(45) Bekanntmachung des Hinweises auf die
Patenterteilung:
**10.04.91 Patentblatt 91/15**

(84) Benannte Vertragsstaaten:
**AT CH DE FR GB IT LI**

(56) Entgegenhaltungen:
**EP-A- 0 008 434**
**EP-A- 0 011 428**

**PLASTICS ENGINEERING, Band 39, Nr. 8, August 1983, Seiten 43-47, Manchester, New Hampshire, US; H. HELMY: "Grooved intensively cooled extruders for tough-to-process polyolefins"**

(73) Patentinhaber: **HOECHST AKTIENGESELL-SCHAFT**
**Postfach 80 03 20**
**W-6230 Frankfurt am Main 80(DE)**

(72) Erfinder: **Manthey, Michael**
**Lütticher Strasse 14**
**W-4200 Oberhausen 11(DE)**

## Beschreibung

Die vorliegende Erfindung betrifft ein Verfahren zum Extrudieren von ultrahochmolekularem Polyethylen (UHMW-PE) auf Schneckenextrudern.

Unter den Polyethylenen nehmen die UHMW-PE-Typen eine Sonderstellung ein. Man versteht hierunter nach dem Niederdruck-(Ziegler-)Verfahren hergestellte Polyethylene mit einer viskosimetrisch gemessenen Molmasse von 1 Million g.Mol$^{-1}$ und mehr. Im allgemeinen hat die Molmass der Polymerisate Werte zwischen etwa 1 und 8 Millionen g.Mol$^{-1}$.

Ultrahochmolekulares Polyethylen zeichnet sich durch bemerkenswerte mechanische und chemische Eigenschaften aus. Es besitzt auch bei tiefen Temperaturen eine hohe Schlagzähigkeit. Daher führen selbst stärkste Schlagbeanspruchungen nicht zum Bruch. Es ist weiterhin verschleißfest, besitzt gute Gleiteigenschaften und eine breite chemische Beständigkeit. Seine Wärmestandfestigkeit ist im Vergleich zu Polyethylenen niedrigerer Molmasse höher.

Auf Grund seines günstigen mechanischen, thermischen und chemischen Verhaltens hat UHMW-PE in den verschiedensten Anwendungsgebieten Eingang als vielseitiger Werkstoff gefunden. Als Beispiele seien genannt die Textilindustrie, der Maschinenbau, die chemische Industrie und der Bergbau.

Der Verwendungsmöglichkeit des Werkstoffes sind dadurch Grenzen gesetzt, daß seine Verarbeitung auf Kolbenstrangpressen und den üblichen Ein- bzw. Mehrschneckenextrudern zu Formkörpern nicht immer zu befriedigenden Ergebnissen führt.

Um UHMW-PE möglichst schonend, d.h. ohne Beeinträchtigung seiner mechanischen Eigenschaften zu extrudieren, verwendet man vielfach Kolbenstrangpressen (Ramextruder). Trotz mancher Vorzüge genügt diese Verarbeitungsweise aber nicht allen Ansprüchen. Störend und nicht immer tolerierbar sind insbesondere die an den Formkörpern auftretenden Hubmarkierungen.

Diesen Nachteil weisen auf Schneckenextrudern hergestellte Hohlkörper und Profile aus UHMW-PE nicht auf. Jedoch wird das hochmolekulare Polymerisat schon bei mittleren Schneckendrehzahlen stark überhitzt. Infolge der hohen Viskosität der Schmelzen, die auch bei Temperaturerhöhung nur geringfügig vermindert wird, wird ein sehr hoher Anteil der der Schnecke zugeführten mechanischen Energie über Reibung in Wärme umgewandelt. Diese Überhitzung kann so groß sein, daß sie zu einer thermischen Schädigung des Kunststoffes durch Abbau oder Zersetzung, d.h. durch Spaltung der Molekülketten und damit zu einer Herabsetzung der mittleren Molmasse führt. Während der Durchsatz - das ist die in der Zeiteinheit geförderte Extrudatmenge - etwa proportional der Schneckendrehgeschwindigkeit zunimmt, steigt die Temperatur überproportional an. Aus diesem Grunde kann UHMW-PE auf Schneckenextrudern nur bei geringer Schneckendrehzahl extrudiert werden. Damit wird das Verfahren aber unwirtschaftlich und für viele technische Einsatzgebiete ungeeignet.

Es bestand daher die Aufgabe, ein Verfahren zur Herstellung von Formkörpern aus ultrahochmolekularem Polyethylen zu entwickeln, das die aufgezeigten Nachteile vermeidet. Diese Aufgabe wird durch die vorliegende Erfindung gelöst.

Sie besteht in einem Verfahren zum Extrudieren von ultrahochmolekularem Polyethylen auf Schneckenextrudern mit den Funtionsbereichen Einzugszone, Umwandlungszone und Ausstoßzone (Meteringzone) und nachgeschaltetem Verformungswerkzeug wie beschrieben in "Plastics Engineering", Band 39,Nr.8 Aug. 1983, S.43-47. Es ist dadurch gekennzeichnet, daß das ultrahochmolekulare Polyethylen vor Eintritt in das Verformungswerkzeug auf Temperaturen unterhalb des Kristallitschmelzbereiches gekühlt wird.

Das neue Verfahren stellt nicht nur sicher, daß das Polymerisat schonend, d.h. weitgehend ohne thermischen Abbau verarbeitet wird, man erhält darüber hinaus Hohl- und Vollprofile mit einwandfreien Oberflächen, die frei von Lunkern und Poren sind und keine inneren Spannungen aufweisen. Die erfindungsgemäße Arbeitsweise erlaubt einen hohen Materialdurchsatz und ist dementsprechend sehr wirtschaftlich.

Bei der Extrusion der verschiedensten Werkstoffe unterscheidet man üblicherweise drei Funktionsbereiche der Schnecke: die Einzugszone, die Umwandlungs- oder Plastifizierzone und die Ausstoß- oder Meteringzone. Sie sind unterschiedlich konstruiert und unterschiedlich beheizt.

In der Einzugszone wird der Rohstoff aufgenommen, gefördert und verdichtet. Reibungskräfte können bereits bei diesem Verarbeitungsschritt zu einer erheblichen Erwärmung des Thermoplasten führen, so daß im Falle des UHMW-PE der Kristallit-Schmelzbereich überschritten wird.

Aus der Einzugszone gelangt das Material in die Umwandlungszone. Hier wird es weiter verdichtet, entlüftet, d.h. vom eingeschlossenen Gas befreit, homogenisiert und gleichmäßig temperiert.

Die Ausstoß- oder Meteringzone übernimmt das aus der Umwandlungszone kommende Material und fördert es mit dem notwendigen Druck und in gleichmäßigem Fluß in das nachgeschaltete Verformungswerkzeug.

Es ist ein wesentliches Merkmal des erfindungsgemäßen Verfahrens, daß das ultrahochmolekulare Polyethylen während der Förderung, der Entlüftung und Verdichtung bis zum Aufbau des Druckes, der zur Überwindung des Widerstandes des Verformungswerkzeuges erforderlich ist, also im gesamten Bereich der Schnecke auf Temperaturen gekühlt wird, die unterhalb des Kristallitschmelzbereiches liegen, d.h. es wird zumindest ein Teil der durch Reibung in der Schnecke entstandenen Wärme abgeführt. Erst bei Eintritt in das Verformungswerkzeug wird die zu plastifizierende Masse auf höhere Temperaturen erhitzt.

Als Kristallitschmelzbereich bezeichnet man das Temperaturinterval, in dem die teilkristallinen Bereiche im Polymerisat in den thermoplastischen Zustand übergehen. Beim ultrahochmolekularen Polyethylen liegt dieser Schmelzbereich (bestimmt durch Differentialthermoanalyse) etwa zwischen 130 bis 133° C. Es empfiehlt sich, in der Schnecke ein gegenüber diesem Temperaturbereich deutlich niedrigeres Temperaturniveau einzustellen. Bewährt hat es sich, die Temperatur des Polymerisats auf Werte von 10 bis 90° C, insbesondere von 20° bis 30° C zu beschränken. Die Temperatur im Verformungswerkzeug richtet sich nach Art und Größe der Hohlköper bzw. Profile und beträgt im allgemeinen 150° bis 250° C, insbesondere 190 bis 230° C.

Die Kühlung des Polymerisats im Bereich der Schnecke erfolgt in bekannter Weise mit Hilfe von Kühlmitteln wie Wasser, die den Zylinder, also den Teil des Extruders, den die Schnecke ausfüllt, umströmen. Nach dem neuen Verfahren können die verschiedensten UHMW-PE-Typen verarbeitet werden. Es eignet sich zur Extrusion von Polymerisaten mit einer viskosimetrisch gemessenen Molmasse von 1 Million g.Mol⁻¹ ebenso gut, wie zur Extrusion des Polyethylens mit einer viskosimetrisch bestimmten Molmasse von 8 bis 10 Millionen g.Mol⁻¹. Das Polymerisat wird der Einzugszone als Pulver zugeführt. Es hat sich bewährt, das Ausgangsmaterial in Form von Partikeln einzusetzen, deren Durchmesser 0,8 mm nicht übersteigt und insbesondere 0,2 bis 0,6 mm beträgt.

Je nach Art des verwandten Verformungswerkzeuges lassen sich nach dem erfindungsgemäßen Prozeß sowohl Voll- als auch Hohlprofile herstellen. Es eignet sich zur Erzeugung von durchplastifizierten Formteilen ebenso gut, wie zur Herstellung von porösen Körpern. Poröse Körper erhält man durch entsprechende Temperaturführung im Verformungswerkzeug und/oder durch Steuerung der Materialzufuhr. Die Temperatur ist in diesem Fall so zu wählen, daß die einzelnen Partikel ihre Form zumindest teilweise beibehalten, also nicht voll durchplastifiziert sind und miteinander verkleben. Je nach Dimension der porösen Teile begrenzt man die Temperatur im Verformungsteil auf 150° bis 170° C. Auch durch Erhöhung der Materialzufuhr bei vorgegebener Temperatur können die für die Erzeugung poröser Formkörper geeigneten Verarbeitungsbedingungen eingestellt werden.

Der folgende Versuch erläutert die Erfindung am Beispiel der Herstellung eines Rohrprofils.

## Versuch

In einem Schneckenextruder wurde unter Verwendung eines 150 mm langen Werkzeuges ein Rohrprofil mit 50 mm Außen- und 40 mm Innendurchmesser aus ultrahochmolelularem Polyethylen einer viskosimetrisch gemessenen Molmasse von 4 Mio g.Mol⁻¹ gefertigt. Über eine Schüttelrinne gelangt das pulverförmige UHMW-PE gleichmäßig in den Extruder, so daß ein Materialstau im Einzugsbereich vermieden werden konnte. Durch intensive Kühlung mit Wasser wurde sichergestellt, daß die Temperatur während der Förderung und der Verdichtung des Materials 20° C nicht überstieg. Die Formgebung im elektrisch geheizten Werkzeug erfolgte bei etwa 150° C. Nach dem Austritt aus dem Werkzeug wurde das Rohr an der Luft abgekühlt. Es ist durchplastifiziert und weist eine glatte ebenmäßige Oberfläche auf.

## Ansprüche

1. Verfahren zum Extrudieren von ultrahochmolekularem Polyethylen auf Schneckenextrudern mit den Funktionsbereichen Einzugszone, Umwandlungszone und Ausstoßzone (Meteringzone) und nachgeschaltetem Verformungswerkzeug, dadurch gekennzeichnet, daß das ultrahochmolekulare Polyethylen vor Eintritt in das Verformungswerkzeug auf Temperaturen unterhalb des Kristallitschmelzbereichs gekühlt wird.

2. Verfahren nach Anspruch 1, dadurch gekennzeichnet, daß die Temperatur des Polyethylens vor Eintritt in das Verformungswerkzeug 10 bis 90° C, insbesondere 20 bis 30° C beträgt.

3. Verfahren nach Anspruch 1 oder 2, dadurch gekennzeichnet, daß die Temperatur im Verformungswerkzeug 150 bis 250° C, insbesondere 190 bis 230° C beträgt.

4. Verfahren nach einem oder mehreren der Ansprüche 1 bis 3, dadurch gekennzeichnet, daß die Korngröße des Polyethylens nicht größer als 0,8 mm ist und insbesondere 0,2 bis 0,6 mm beträgt.

## Claims

1. A process for extruding ultra-high molecular weight polyethylene on screw extruders having the function areas feed zone, compression zone and discharge zone (metering zone) and a downstream plastics-forming mould, characterised in that the ultra-high molecular weight polyethylene is cooled to temperatures below the crystallite melting range before entering the plastics-forming mould.

2. A process according to claim 1, characterised in that the temperature of the polyethylene is 10 to 90°C, in particular 20 to 30°C, before entering the plastics-forming mould.

3. A process according to claims 1 or 2, characterised in that the temperature in the plastics-forming mould is 150 to 250°C, in particular 190 to 230°C.

4. A process according to one or more of the claims 1 to 3, characterised in that the grain size of the polyethylene is not greater than 0.8 mm and, in particular, is 0.2 to 0.6 mm.

**Revendications**

1. Un procédé pour l'extrusion de polyéthylène de très haut poids moléculaire dans des extrudeuses à vis comportant les domaines fonctionnels, zone d'alimentation, zone de transformation et zone d'homogénéisation, et l'outil de formage branché à la suite, caractérisé en ce que le polyéthylène de très haut poids moléculaire est refroidi avant l'entrée dans l'outil de formage à des températures inférieures au domaine de fusion des cristallites.

2. Procédé selon la revendication 1, caractérisé en ce que la température du polyéthylène avant l'entrée dans l'outil de formage est de 10 à 90°C, en particulier de 20 à 30°C.

3. Procédé selon la revendication 1 ou 2, caractérisé en ce que la température dans l'outil de formage est de 150 à 250°C, en particulier de 190 à 230°C.

4. Procédé selon l'une ou plusieurs des revendications 1 à 3, caractérisé en ce que la grosseur de grain du polyéthylène n'est pas supérieure à 0,8 mm et elle est en particulier de 0,2 à 0,6 mm.